Europäisches Patentamt

European Patent Office

Office européen des brevets

(19)

(11) Numéro de publication: **0 190 514**
**B1**

(12) **FASCICULE DE BREVET EUROPEEN**

(45) Date de publication du fascicule du brevet: **04.07.90**

(51) Int. Cl.⁵: **G 06 F 15/332**

(21) Numéro de dépôt: **85402113.6**

(22) Date de dépôt: **04.11.85**

(54) Dispositif de test en ligne de circuit de calcul de la transformée de Fourier discrète, et circuit comportant un tel dispositif.

(30) Priorité: **06.11.84 FR 8416877**

(43) Date de publication de la demande:
**13.08.86 Bulletin 86/33**

(45) Mention de la délivrance du brevet:
**04.07.90 Bulletin 90/27**

(84) Etats contractants désignés:
**DE GB IT NL**

(56) Documents cités:
**DE-A-2 436 034**

**NEW ELECTRONICS, vol. 16, no. 8, 19 avril 1983, pages 52,54, Londres, GB; A.J.R. LORD: "Signal processing using f.f.t. techniques"**

(73) Titulaire: **THOMSON-CSF**
**51, Esplanade du Général de Gaulle**
**F-92800 Puteaux (FR)**

(72) Inventeur: **Du Chene, Arnaud**
**THOMSON - CSF SCPI 173, bld Haussmann**
**F-75379 Paris Cedex 08 (FR)**
Inventeur: **Delalande, Brigitte**
**THOMSON - CSF SCPI 173, bld Haussmann**
**F-75379 Paris Cedex 08 (FR)**
Inventeur: **Mariaux, Thierry**
**THOMSON - CSF SCPI 173, bld Haussmann**
**F-75379 Paris Cedex 08 (FR)**

(74) Mandataire: **Benoit, Monique et al**
**THOMSON-CSF SCPI**
**F-92045 PARIS LA DEFENSE CEDEX 67 (FR)**

Courier Press, Leamington Spa, England.

**Description**

L'invention a principalement pour objet un dispositif de test en ligne de circuit de calcul de la transformée de Fourier discrète et circuit comportant un tel dispositif.

La transformée de Fourier est un outil mathématique extrêmement puissant utilisé notamment pour calculer des spectres.

La transformée de Fourier permet notamment de calculer le produit de convolution. En effet la transformée de Fourier du produit de convolution de deux fonctions est égale au produit de transformée de Fourier de ces deux fonctions. Ainsi, en chaque point le produit de convolution de deux fonctions est égal à la transformée de Fourier inverse du produit des transformées de Fourier de ces deux fonctions.

Il est souvent avantageux de pondérer une fonction dont on désire calculer la transformée de Fourier. Le dispositif objet de la présente invention permet d'effectuer, sur commande, la pondération, par exemple avant le calcul de la transformée de Fourier. Pour une suite discrète, la pondération est effectuée en multipliant les terms de la suite par des coefficients de pondération par exemple stockés dans une mémoire morte (ROM en terminologie anglo-saxonne). Avantageusement, la mémoire morte contient plusieurs jeux de coefficients de façon à pouvoir choisir la pondération désirée.

Il est souvent indispensable de vérifier la validité des résultats calculés. Une solution consiste par exemple à doubler le nombre de circuit de calcul et de leur associer un comparateur qui ne valide le calcul que si les résultats calculés par les deux circuits sont identiques. Cette démarche s'avère très coûteuse. Le dispositif selon l'invention permet de vérifier le résultat de calcul de la transformée de Fourier pour un taux d'erreur prédéterminé. Pour cela le dispositif vérifie le résultat du calcul de la transformée de Fourier à l'aide du théorème de Parseval. Le résultat calculé par l'opérateur est validé uniquement en cas d'égalité des résultats. Avantageusement, le résultat erroné est remplacé par le résultat précédent ou le résultat suivant ou est tout simplement remplacé par l'interpolation linaire de ces deux résultats.

Le circuit objet de la présente invention est connecté à un circuit effectuant pour une suite de nombres le calcul numérique, appelée transformée de Fourier discrète, nommée TFD dans la suite de ce brevet. Pour chaque temps, les valeurs de la TFD sont sensiblement égales à la valeur de la transformée de Fourier.

Soit f une suite de nombres $f_n$, n étant le rang du nombre $f_n$ dans la suite f.

La suite f est par exemple la suite de N valeurs numériques d'une fonction qu'on a échantillonnée.

$F_k$, TFD de $f_n$ est définie par :

$$F_k = \sum_{n=0}^{N-1} f_n \, W^{nk} \qquad \text{avec } W = e^{-j(2\pi/N)}$$

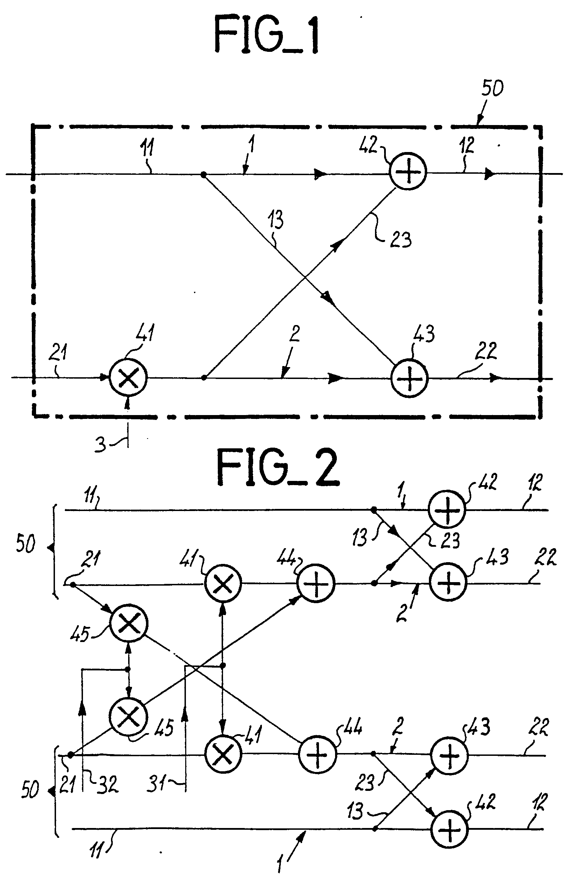

Le dispositif selon l'invention se propose de décomposer un calcul complexe en des successions de calculs simples. Pour cela le dispositif selon l'invention utilise une structure en papillon illustrée sur la figure 1.

L'algorithme de calcul de TFD est celui de la décimation en temps:

Si N est paire, la suite f peut être décomposée en une suite g des termes de f de coefficient pair et en une suite h des termes de la suite f de coefficient impair.

$$\text{Pour } 0 \leqslant L \leqslant \frac{N}{2} - 1$$

$$g_L = f_{2L}$$

$$h_L = f_{2L+1}$$

Soit $G_k$ et $H_k$ les TFD respectivement de $g_L$ et de $h_L$

$$G_k = \sum_{L=0}^{\frac{N}{2}-1} g_L \, (W^2)^{Lk}$$

$$H_k = \sum_{L=0}^{\frac{N}{2}-1} h_L \, (W^2)^{Lk}$$

Alors

$$F_k = \begin{cases} G_k + W^k H_k & \text{pour } 0 \leqslant k \leqslant \frac{N}{2} - 1 \\ G_{k-N/2} + W^k H_{k-N/2} & \text{pour } \frac{N}{2} \leqslant k \leqslant N - 1 \end{cases} \tag{1}$$

Notamment pour deux indices dont la différence es égale à

$$\frac{N}{2}$$

on a:

$$W^{m+N/2} = -W^m$$

$$F_m = G_m + W^m H_m$$

$$\text{et} \quad F_{m+\frac{N}{2}} = G_m + W^{m+\frac{N}{2}} H_m = G_m - W^m H_m$$

L'invention sera mieux comprise au moyen de la description ci-après et des figures annexées données come des exemples non limitatifs parmi lesquels:

la figure 1 illustre un cycle de calcul appelé papillon TFD pour nombres réels;

la figure 2 illustre un papillon TFD pour nombres complexes;

les figures 3 à 5 illustrent les chemins de données;

la figure 6 illustre un exemple de réalisation de circuit selon l'invention;

les figures 7 et 8 illustrent les évolutions dans le temps des fonctions des composants du circuit selon l'invention;

les figures 9 et 10, illustrent deux exemples de réalisation du disposiif selon l'invention.

Sur les figures 1 à 10 les mêmes références désignent les mêmes éléments.

Sur les figures 1 à 10 le sens des flots de donnée est indiqué par des flèches.

Sur la figure 1, on peut voir un schéma synoptique d'un papillon TFD 50 utilisant l'algorithme de la décimation en temps. Le papillon 50 comporte une première ligne 1, avec une entrée 11 et une sortie 12 et une seconde ligne 2, avec une entrée 21 et une sortie 22. La ligne 1 comprend un additionneur 42. La ligne 2 comprend un multiplieur 41 suivi d'un additionneur 43. Les entrées du multiplieur 41 sont connectées à l'entrée 21 de la ligne 2 et à une ligne 3. Les entrées de l'additionneur 42 sont connectées à la ligne 1 d'une part et à la ligne 2 au niveau de la sortie du multiplieur 41 par une ligne 23 d'autre part. Les entrées de l'additionneur 43 sont connectées à la ligne 2 au niveau de la sortie du multiplieur 41 d'une part et à la ligne 1 en amont de l'additionneur 42 par une ligne 13 d'autre part.

Le papillon 50 illustré par la figure l'est particulièrement bien adapté pour le calcul en décimation en temps de termes de la TFD de suites de nombres réels. La décimation en temps suppose qu'aux entrées 11 et 21 du papillon 50 se présentent les termes des suites g et h. Par contre aux sorties 12 et 22 du papillon 50 on trouve les termes ordonnés de la suite F. Le tableau suivant donne la correspondance des indices d'entrée et de sortie pour une TFD de huit termes. Celle des indices est liée par la relation dite "bit reverse" car les chiffres de poids fort et les chiffres de poids faible sont permutés dans l'écriture binaire de ces indices.

## TABLEAU I

| Indice d'entrée | | Indice de sortie | |
| --- | --- | --- | --- |
| Décimal | Binaire | Décimal | Binaire |
| 0 | 000 | 000 | 0 |
| 4 | 100 | 001 | 1 |
| 2 | 010 | 010 | 2 |
| 6 | 110 | 011 | 3 |
| 1 | 001 | 100 | 4 |
| 5 | 101 | 101 | 5 |
| 3 | 011 | 110 | 6 |
| 7 | 111 | 111 | 7 |

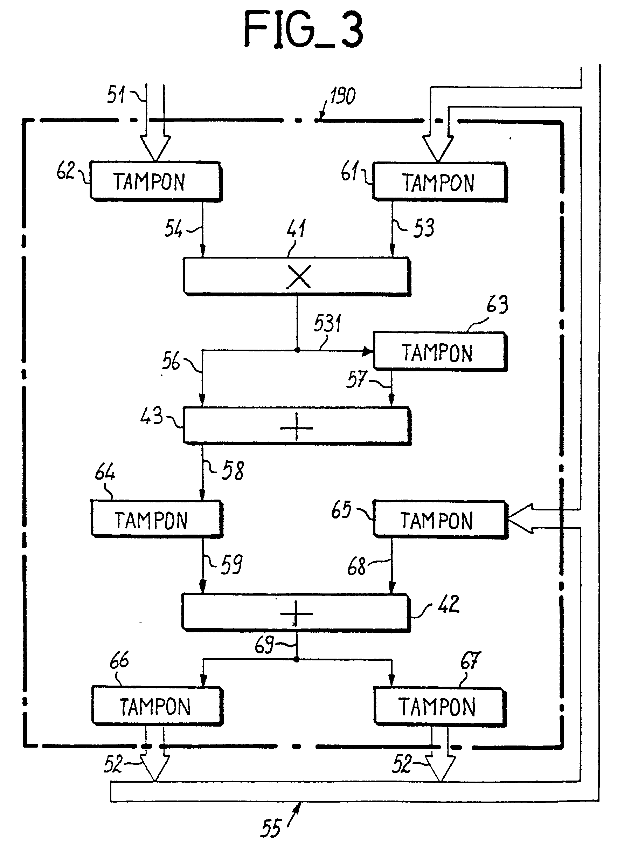

Sur la figure 2, on peut voir un ensemble de deux papillons 50 susceptibles d'effectuer le calcul de TFD sur des suites de nombres complexes. Chacun des papillons 50 comporte un additionneur 44 dont une des entrées est connectée à la sortie des multiplieurs 41. L'autre entrée desdits additionneurs 44 est connectée via des multiplieurs 45 aux entrées 21 des papillons complémentaires. D'autre part, les entrées des multiplieurs 45 sont connectées à une ligne 32. Les entrées des multiplieurs 41 sont connectées à une ligne 31. Les lignes 31 et 32 correspondant à la ligne 3 de la figure 1.

Sur la figure 3, on peut voir le chemin de donnée pour le calcul de la TFD dans un exemple de processeur selon l'invention. Le dispositif 190 des figures 3, 4 et 5 comporte le multiplieur 41, les additionneurs 42 et 43 ainsi que des mémoires tampon 61 à 67. Les mémoires tampon 61 à 67 assurent le retard d'un cycle d'horloge nécessaire au synchronisme de la structure pipe-line du processeur selon l'invention ainsi qu'une resynchronisation par rapport aux impulsions d'horloge. Un bus de donnée 55 relie le dispositif 190 des figures 3, 4 et 5 à une mémoire non représentée. L'entrée de la mémoire tampon 61 est reliée au bus 55. L'entrée de la mémoire tampon 62 est reliée par un bus 51 à une mémoire de coefficient de la TFD non représentée. Les sorties des mémoires tampon 61 et 62 sont reliées aux entrées du multiplieur 41 respectivement par les lignes 53 et 54. La sortie du multiplieur 41 est reliée d'une part par une ligne 531 à la mémoire tampon 63 et d'autre part par une ligne 56 à une entrée de l'additionneur 43. La sortie de la mémoire tampon 63 est reliée à l'autre entrée de l'additionneur 43 par une ligne 57. La sortie de l'additionneur 43 est reliée à l'entrée de la mémoire tampon 64 par une ligne 58. La sortie de la mémoire tampon 64 est reliée à une entrée de l'additionneur 42 par une ligne 59. L'entrée de la mémoire tampon 65 est reliée au bus 55. La sortie de la mémoire tampon 65 est reliée à l'autre entrée de l'additionneur 42 par une ligne 68. La sortie de l'additionneur 42 est reliée aux entrées des mémoires tampon 66 et 67 par une ligne 69. Les sorties 52 des mémoires tampon 66 et 67 sont reliées au bus 55.

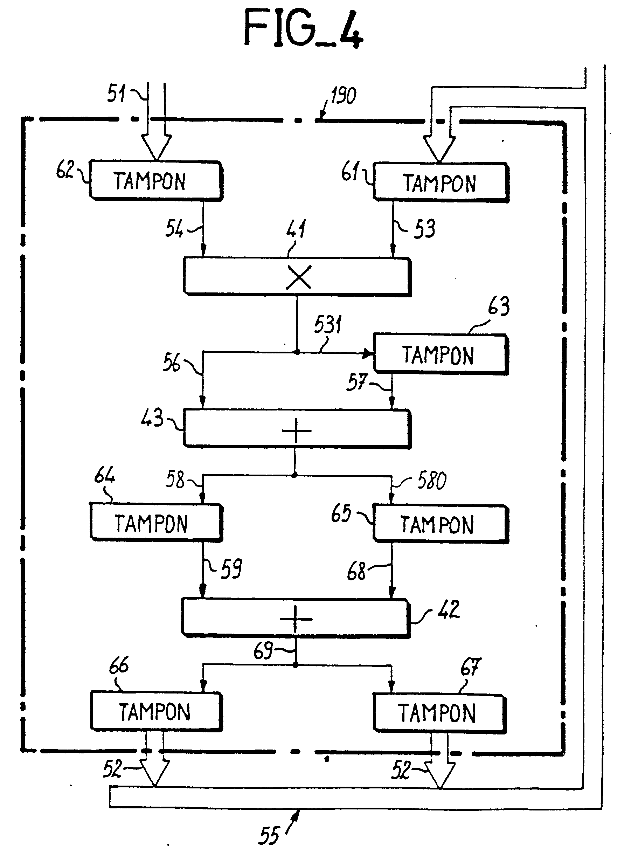

Sur la figure 4, on peut voir le chemin de donnée pour le calcul de la pondération dans un exemple de processeur selon l'invention. L'entrée de la mémoire tampon 61 est reliée au bus 55. L'entrée de la mémoire tampon 62 est reliée par un bus 51 à une mémoire des coefficients de la TDF non représentée. Les sorties des mémoires tampon 61 et 62 sont reliées aux entrées du multiplieur 41 respectivement à la ligne 53 et 54. La sortie du multiplieur 41 est reliée d'une part à la ligne 531 à une mémoire tampon 63 et d'autre part à la ligne 56 à une entrée de l'additionneur 43. La sortie de la mémoire tampon 63 est reliée à l'autre entrée de l'additionneur 43 par la ligne 57. La sortie de l'additionneur 43 est reliée d'une part à l'entrée de la mémoire tampon 65 par la ligne 580 et d'autre part à l'entrée de la mémoire tampon 64 par une ligne 58. La sortie de la mémoire tampon 65 est reliée à une entrée de l'additionneur 42 par une ligne 68. La sortie de la mémoire tampon 64 est reliée à l'autre entrée de l'additionneur 42 par une ligne 59. La sortie de l'additionneur 42 est reliée aux entrées des mémoires tampon 66 et 67 par la ligne 69. Les sorties 52 des mémoires tampon 66 et 67 sont reliées au bus 55.

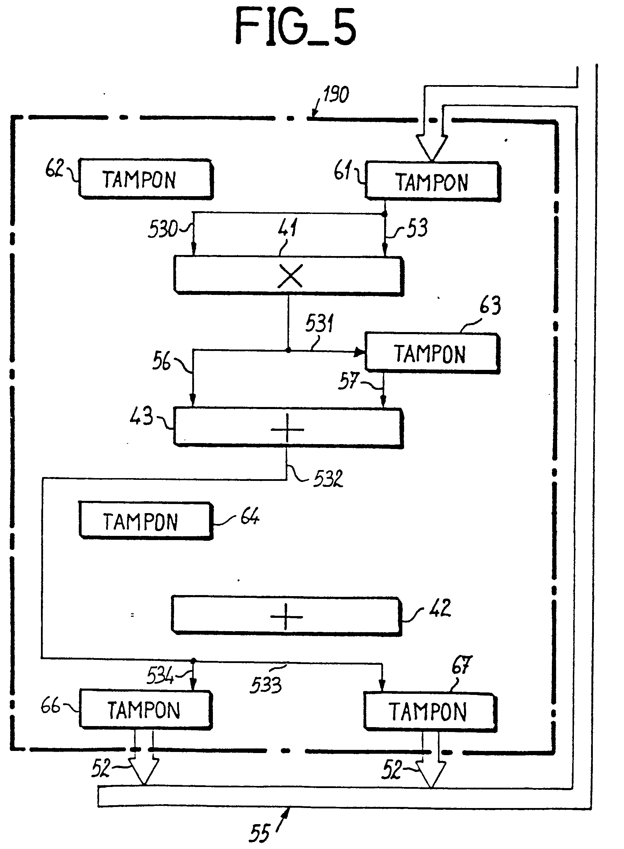

Sur la figure 5, on peut voir le chemin de donnée pour le calcul du module d'un exemple de processeur 190 selon l'invention. Les mémoires tampon 62 et 64 ainsi que l'additionneur 42 du dispositif 190 ne sont pas connectés pour le calcul du module. L'entrée de la mémoire tampon 61 est reliée au bus 55. La sortie de la mémoire tampon 61 est reliée à une première entrée du multiplieur 41 par une ligne 53 à une seconde entrée du multiplieur 41 par une ligne 530. La sortie du multiplieur 41 est reliée d'une part à l'entrée de la mémoire tampon 63 par une ligne 531 et d'autre part à une entrée de l'additionneur 43 par la ligne 56. La sortie de la mémoire tampon 63 est reliée à l'autre entrée de l'additionneur 43 par la ligne 57. La sortie de l'additionneur 43 est reliée aux entrées des mémoires tampon 66 et 67 respectivement par les lignes 534 et 533. Les sorties 52 des mémoires tampon 66 et 67 sont reliées au bus 55.

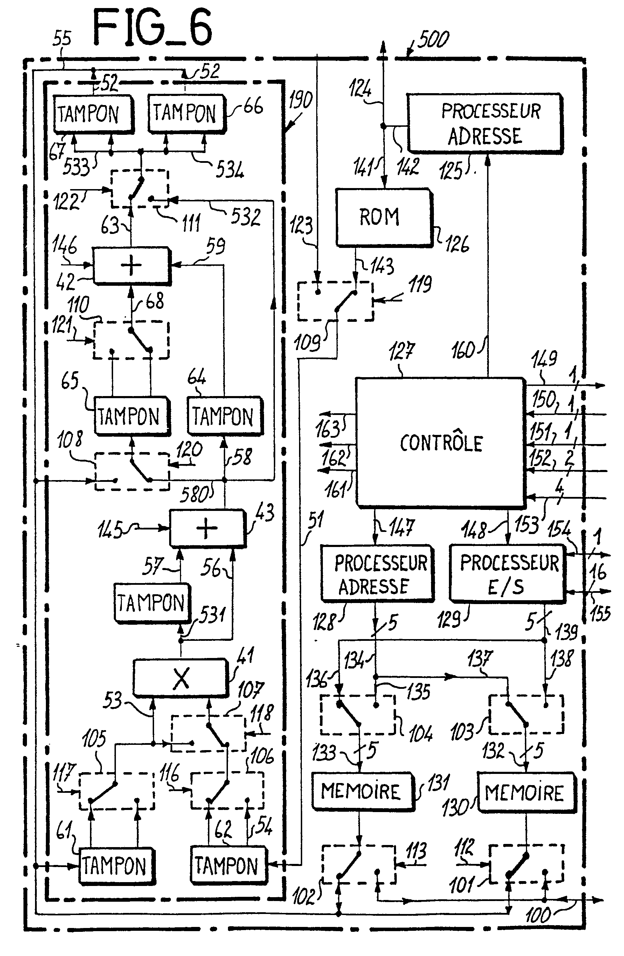

Sur la figure 6, on peut voir un exemple de réalisation particulièrement performant du processeur 500 de calcul de la TFD selon l'invention. Le processeur 500 permet de choisir le calcul de la TFD, de la pondération suivie du calcul de TFD ou du calcul des modules. Il sera évident pour l'homme de l'art d'après l'enseignement contenu dans ce brevet de réaliser un processeur exécutant d'abord les corrélations, la TFD suivie d'un calcul de pondération. Le processeur 500 comporte le dispositif 190 des figures 3, 4 et 5, deux mémoires vives 130 et 131 (RAM en terminologie anglo-saxonne) un processeur des entrée-sortie 129, un processeur 128 de calcul d'adresse des mémoires 130 et 131, une mémoire des coefficients 126 associée à un processeur d'adresse 125 ainsi qu'un circuit 127 logique de contrôle du processeur 500. La présence des mémoires internes au processeur 500 ainsi que de leur processeur d'adresse et d'entrées-sorties permet d'augmenter la vitesse de traitement du processeur. Les chemins de donnée désirés dans le processeur 500 sont choisis grâce à des commutateurs 101, 102, 103, 104, 105, 106, 107, 108, 109, 110 et 111 commandés respectivement par les signaux 112, 113, 114, 115, 116, 117, 118, 119, 120, 121 et 122. Les signaux de commande des commutateurs sont émis par l'unité de contrôle 127 par la ligne 161.

Le dispositif 190, le commutateur 105 et 106 permettent de choisir les sorties des mémoires tampon 61 et 62. La sortie du commutateur 106 est connectée au commutateur 107 permettant de choisir à l'une des entrées du multiplieur 41 entre la sortie de la mémoire 62 et celle de la mémoire 61. Le commutateur 108 permet de choisir de connecter l'entrée de la mémoire tampon 65 au bus 55 ou à la sortie de l'additionneur 43. Le commutateur 110 permet de choisir une des deux sorties de la mémoire tampon 65. Le commutateur 111 permet de choisir d'envoyer les informations présentes à la sortie de l'additionneur 42 à la mémoire tampon 66 ou 67.

Dans l'exemple de réalisation de la figure 6 les mémoires 130 et 131 ont une taille réduite. Ainsi un bus de donnée 100 les relie à une mémoire externe non représentée. Dans cette dernière mémoire est stockée la suite dont on veut calculer la TFD. Les commutateurs 101 et 102 permettent de choisir entre l'écriture des données à partir du bus 100 ou la lecture des données en mémoire et l'envoie sur le bus 55 des mémoires respectivement 130 et 131. Le commutateur 101 reçoit un signal de commande 112 et le commutateur 102 un signal de commande 113. Les mémoires 130 et 131 comportent respectivement un bus d'adresse 132 et 133. Dans l'exemple de réalisation illustré par la figure 6, la Demanderesse a utilisé des bus d'adresse de cinq bits correspondant à la capacité des mémoires 130 et 131. Les bus d'adresses 132 et 133 sont reliés au processeur des entrées-sorties 129 en mode écriture ou au processeur d'adresse 128 en mode lecture La sélection est opérée par les mémoires 130 et 131 respectivement par le commutateur 103 et 104 qu reçoivent respectivement les signaux de commande 114 et 115. Le processeur d'entrée-sortie 129 est relié au commutateur par tout d'abord une ligne 139 reliée elle-même au commutateur 103 par une ligne 138 et au commutateur 104 par une ligne 136. Le processeur d'adresse 128 est relié aux commutateurs 103 et 104 respectivement par les lignes 137 et 135 reliées à la ligne 134. Le processeur entrées-sorties 129 est relié par la ligne 155 à la mémoire externe non représentée, sur laquelle il envoie par exemple sur seize bits l'adresse à lire dans ladite mémoire externe.

En mode lecture les mémoires 130 et 131 sont reliées au bus de donnée 55 afin de fournir au dispositif 190 les données à traiter.

La mémoire 126 contient les coefficients W de la TFD. Elle est connectée au bus 51 par l'intermédiaire de la ligne 143 et du commutateur 109. Le processeur d'adresse 125 de la mémoire 126 est relié à son bus d'adresse 141 par une ligne 142. La mémoire 126 est par exemple une mémoire morte (ROM en terminologie anglo-saxonne) ou mémoire morte programmable (PROM en terminologie anglo-saxonne). Avantageusement le dispositif selon l'invention permet le changement des coefficients W de la TFD. Les jeux supplémentaires des coefficients sont stockés dans une mémoire externe du processeur 500. Le processeur d'adresse 125 permet l'adressage de cette mémoire par la ligne 142 et le bus 124. Les données de cette mémoire sont présentes sur le bus 123 qui est connectè au bus 51 par l'intermédiaire du commutateur 109. Le processeur d'entrée-sortie 129 est connecté à une horloge d'entrée-sortie externe. Toutes les horloges internes au processeur 500 sont synchronisées par le dispositif de contrôle 127 au moyen de la ligne 162. Suivant le type de calcul à exécuter les additionneurs 43 et 42 doivent exécuter des additions ou des soustractions. La commutation entre ces deux fonctions est effectuée par les signaux 145 et 146 reçus à partir du dispositif de contrôle 127 par l'intermédiaire de la ligne 163. Le nombre N des termes de la suite f dont on veut calculer la TFD est donné par la ligne 153. L'ordre d'effectuer une pondération est donné au dispositif de contrôle 127 par la ligne 152 par exemple sur un bit. L'ordre de calculer le module est donné au dispositif de contrôle 127 par la ligne 151 par exemple sur un bit. L'ordre de commencement de calcul est donné au dispositif de contrôle 127 par la ligne 150 par exemple sur une ligne transmettant un bit. La fin des calculs est signalé par un dispositif de contrôle 127 par la ligne 149 par exemple sur un bit. Pour ne pas encombrer la figure les lignes 161, 162 et 163 ne sont pas représentées.

La mémoire 126 comporte les coefficients w de la TFD qui sont par exemple les racines $N^{ièmes}$ de l'unité. En fait pour tous les calculs les coefficients appartenant à l'intervalle $[0, \pi]$ sont nécessaires. Dans une variante de réalisation la mémoire 126 ne contient que les coefficients appartenant à l'intervalle $[0, \pi/4]$; les autres coefficients étant déduits par des régles classiques de trigonométries. La mémoire 126 contient le coefficient de la TFD de taille maximale que l'on veut calculer, par exemple 4096; le coefficient d'une TFD de taille inférieure constitue un sous-ensemble des coefficients de la TFD de la taille maximale.

Dans un exemple de réalisation le multiplieur 41 est un multiplieur opérant sur des données en format fixe par exemple de seize bits comportant huit étages.

Dans le second exemple de réalisation permettant d'assurer la multiplication de nombre en format à virgules flottantes le multiplieur comporte un circuit de traitement de l'exposant fournissant l'exposant du résultat.

Dans le troisième exemple de réalisation le multiplieur 41 comporte un dispositif permettant de donner le poids respectif aux bits au cas ou le format n'est pas normalisé.

Les additionneurs 43 et 42 traitent des opérants en format à virgules flottantes avec six bits d'exposant et dix huit bits de mantisse. Avantageusement les additionneurs comportent trois étages pipe-line comportant un étage de dénormalisation, un étage additionneur et un étage de rénormalisation.

Comme il est montré par la formule 1 de calcul par le dispositif d'une TFD consiste à subdiviser en groupes indépendants de taille réduite en exécutant toujours les papillons TFD des figures 1 ou 2. Le nombre de ces papillons d'un groupe est donc fixé par la taille du tableau de donnée d'entrée. Par exemple pour une TFD de trente-deux termes on effectue deux étapes: une première avec quatre groupes de huit termes et une seconde avec huit groupes de quatre termes. Ainsi on effectue successivement le transfert un par un des quatre tableaux de donnée des huit termes puis des huit tableaux de donnée de quatre points dans les mémoires 130 et 131. Une fois le calcul exécuté les tableaux résultant sont transférés dans la mémoire externe non représentée aux mêmes adresses que les tableaux d'entrée. On dit alors que le calcul s'effectue "en place". La mémoire interne de calcul est partagée en deux blocs 130 et 131 assurant alternativement le rôle des mémoires d'entrée-sortie et celui de la mémoire de calcul. Avantageusement le bus 100 a une capacité permettant l'accès des données complexes. Par exemple pour l'opération élémentaire nécessitant quatre multiplications réelles et six additions réelles, la mémoire par exemple 130, va fournir au dispositif 190 des données complexes et recevoir également deux données complexes, les coefficients étant issus par exemple de la mémoire 126. Les tableaux suivants donnent les décompositions permettant de calculer les TFD comprises entre 98 termes et 32768 termes.

## TABLEAU II

| N | Groupement | Nombre d'étapes |
|---|---|---|
| 8 | 8 | 1 |
| 16 | 16 | 1 |
| 32 | 32 | 1 |
| 64 | 8 x 8 | 2 |
| 128 | 8 x 16 | 2 |
| 256 | 16 x 16 | 2 |
| 512 | 16 x 32 | 2 |
| 1024 | 32 x 32 | 2 |
| 2048 | 8 x 16 x 16 | 3 |
| 4096 | 16 x 16 x 16 | 3 |
| 8192 | 16 x 16 x 32 | 3 |
| 16384 | 16 x 32 x 32 | 3 |
| 32768 | 32 x 32 x 32 | 3 |

La mémoire par exemple 130 a donc stocké soit:
quatre tableaux de huit termes;
deux tableaux de seize termes;
un tableau de trente-deux termes.

Dans le cas général la mémoire externe non représentée contient R tableau de N termes. A la fin d'un calcul d'une TFD de N termes le processeur 129 passe au tableau suivant.

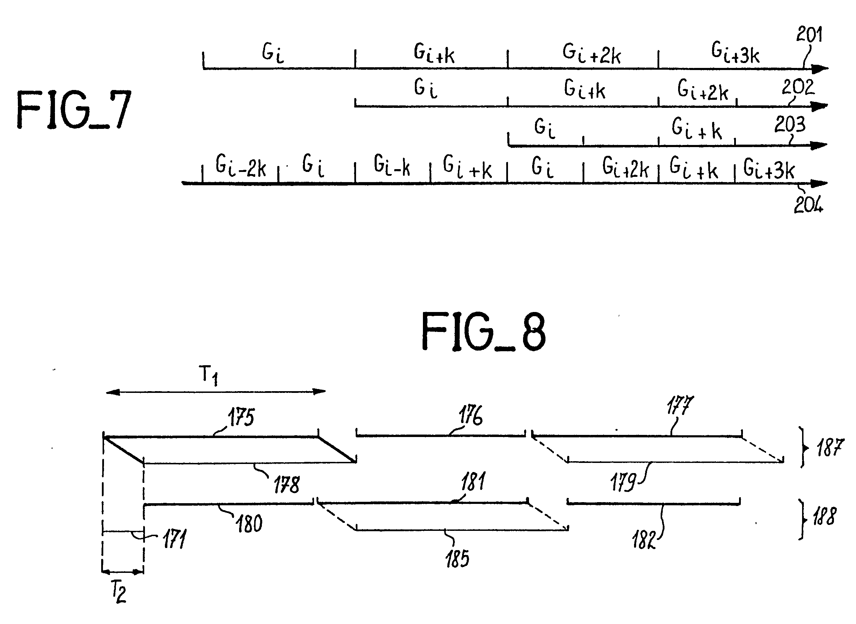

La figure 7 illustre les séquences d'adresse nécessaires aux diverses étapes du traitement TFD par le processeur 500. On a vu dans le tableau II qu'une TFD de N termes peut se décomposer par exemple en trois étapes comportant des groupes de N1, N2, N3 termes tels que $N = N_1 \times N_2 \times N_3$. Dans un exemple de réalisation une séquence d'adresse $G_1$ comportait la juxtaposition de trois nombres C1, C2 et C3 de

longueur respectivement $Log_2N_1$, $Log_2N_2$, $Log_2N_3$. Le processeur 129 fournit à la mémoire externe l'adresse des donées d'entrée du groupe à exécuter.l Pour les calculs du groupe de taille $N_1$ on fait varier C1, C2 et C3 restant constant. Pour calculer le groupe de taille $N_2$ on fait varier C2, C1 et C3 restant constant. Pour calculer le groupe de taille $N_3$ on fait varier C3, C1 et C2 restant constant.

Un exemple d'adresse fourni par un processeur 129 à la mémoire externe de taille $N_1$ est donné par le tableau III.

## TABLEAU III

| $C_1$ | | | $C_2$ | | | $C_3$ | | |
|---|---|---|---|---|---|---|---|---|
| $2^8$ | $2^7$ | $2^6$ | $2^5$ | $2^4$ | $2^3$ | $2^2$ | $2^1$ | $2^0$ |
| 256 | 128 | 64 | 32 | 16 | 8 | 4 | 2 | 1 |
| 0 | 0 | 0 | 0 | 1 | 1 | 0 | 1 | 0 |
| 0 | 0 | 1 | 0 | 1 | 1 | 0 | 1 | 0 |
| 0 | 1 | 0 | 0 | 1 | 1 | 0 | 1 | 0 |
| 0 | 1 | 1 | 0 | 1 | 1 | 0 | 1 | 0 |
| 1 | 0 | 0 | 0 | 1 | 1 | 0 | 1 | 0 |
| 1 | 0 | 1 | 0 | 1 | 1 | 0 | 1 | 0 |
| 1 | 1 | 0 | 0 | 1 | 1 | 0 | 1 | 0 |
| 1 | 1 | 1 | 0 | 1 | 1 | 0 | 1 | 0 |

Le calcul s'exécutant "en place" le processeur 129 fournit donc les adresses de sortie, ces adresses sont toutefois décalées dans le temps par rapport aux adresses d'entrée.

## TABLEAU IV

| Entrées-sorties | | Mémoire interne | | | | | |
|---|---|---|---|---|---|---|---|
| Suite d'entrée | Implan-tation | Suite 1er étage | | Suite 2ème étage | | Suite 3ème étage | |
| 0 | 0 | 0 | 000 | 0 | 000 | 0 | 000 |
| 1024 | 1 | 1 | 001 | 2 | 010 | 4 | 100 |
| 512 | 2 | 2 | 010 | 4 | 100 | 1 | 001 |
| 1536 | 3 | 3 | 011 | 6 | 110 | 5 | 101 |
| 256 | 4 | 4 | 100 | 1 | 001 | 2 | 010 |
| 1280 | 5 | 5 | 101 | 3 | 011 | 6 | 110 |
| 768 | 6 | 6 | 110 | 5 | 101 | 3 | 011 |
| 1792 | 7 | 7 | 111 | 7 | 111 | 7 | 111 |

Dans l'exemple de réalisation représenté sur la figure 6 les coefficients de pondération sont contenus dans une mémoire externe au processeur 500. Le processeur d'adresse 125 calcule ces coefficients et transmet par la ligne 142 au bus 124. Les coefficients obtenus sont envoyés dans la mémoire externe non représentée par le bus de donnée 123 au bus 51. Etant donné que chaque terme dont on veut calculer la TFD doit être multiplié par un coefficient de même indice dans un exemple de réalisation les calculs des coefficients sont effectués par un compteur binaire. Les coefficients sont présents sur le bus 123 de façon séquentielle.

Dans un autre exemple de réalisation les coefficients de la pondération sont symétriques par rapport aux termes d'indice N/2. Dans ce cas il est possible que la mémoire 126 ne contient donc N/2 premier coefficient de la loi de pondération. Dans ce cas un dispositif transformant les bits d'adresse à partir du coefficient de rang N/2 est adjoint sur le bus d'adresse 141 de la mémoire 126.

Dans ce qui suit nous allons présenter un exemple d'organisation d'adressage par le processeur 125 de la mémoire 126, ètant bien entendu que d'autres types d'adresse d'organisation d'adressage ne sortent pas du cadre de la présente invention. Par exemple la mémoire 126 peut contenir rangées séquentiellement les unes à la suite des autres toutes les suites des coefficients nécessaires pur effectuer les calculs de transformée de Fourier voulus. Dans ce cas le processeur d'adresse 125 comportera un compteur binaire qui ajoutera à chaque cycle d'horloge un bit à l'adresse du début de la séquence.

Avantageusement on essaie pour limiter la taille de la mémoire 126 en stockant les séquences de coefficients nécessaires au calcul de TFD qu'une seule fois en les adressant autant de fois qu'il est nécessaire pour effectuer un calcul. Dans ce cas l'adresse comporte deux parties, une première partie appel'ée par la suite séquence de base, fonction uniquement de la taille du groupe TFD calculée et une seconde partie appelée par la suite indexe comportant l'adresse physique à l'intérieur de la mémoire 126 du coefficient. Un exemple de l'adressage de séquence de base est donné par les tableaux V, VI et VII. Le tableau V correspond à un tableau de calcul des huit termes, le tableau VI à un tableau de calcul de seize termes, et le tableau VII à un tableau de calcul de trente-deux termes. Dans un exemple de réalisation l'indexe est obtenu en faisant correspondre un masque binaire à chaque étape et en multipliant bit à bit pour les bits de même poids la valeur du masque pour la valeur du compteur binaire. Un exemple d'une telle séquence de base pour une taille $N_1 = 16$ du tableau de la TFD est donné par le tableau VIII.

## TABLEAU V

$N_{i=8}$

| Etage Papillon | 0 | 1 | 2 |
|---|---|---|---|
| 0 | 0 | 0 | 0 |
| 1 | 0 | 0 | N/8 |
| 2 | 0 | N/4 | 2N/8 |
| 3 | 0 | N/4 | 3N/8 |

## TABLEAU VI

$N_{i=16}$

| Etage Papillon | 0 | 1 | 2 | 3 |
|---|---|---|---|---|
| 0 | 0 | 0 | 0 | 0 |
| 1 | 0 | 0 | 0 | N/16 |
| 2 | 0 | 0 | N/8 | 2N/16 |
| 3 | 0 | 0 | N/8 | 3N/16 |
| 4 | 0 | N/4 | 2N/8 | 4N/16 |
| 5 | 0 | N/4 | 2N/8 | 5N/16 |
| 6 | 0 | N/4 | 3N/8 | 6N/16 |
| 7 | 0 | N/4 | 2N/8 | 7N/16 |

## TABLEAU VII

$N_{i=32}$

| Etape Papillon | 0 | 1 | 2 | 3 | 4 |
|---|---|---|---|---|---|
| 0 | 0 | 0 | 0 | 0 | 0 |
| 1 | 0 | 0 | 0 | 0 | N/32 |
| 2 | 0 | 0 | 0 | N/16 | 2N/32 |
| 3 | 0 | 0 | 0 | N/16 | 3N/32 |
| 4 | 0 | 0 | N/8 | 2N/16 | 4N/32 |
| 5 | 0 | 0 | N/8 | 2N/16 | 5N/32 |
| 6 | 0 | 0 | N/8 | 3N/16 | 6N/32 |
| 7 | 0 | 0 | N/8 | 3N/16 | 7N/32 |
| 8 | 0 | N/4 | 2N/8 | 4N/16 | 8N/32 |
| 9 | 0 | N/4 | 2N/8 | 4N/16 | 9N/32 |
| 10 | 0 | N/4 | 2N/8 | 5N/16 | 10N/32 |
| 11 | 0 | N/4 | 2N/8 | 5N/16 | 11N/32 |
| 12 | 0 | N/4 | 3N/8 | 6N/16 | 12N/32 |
| 13 | 0 | N/4 | 3N/8 | 6N/16 | 13N/32 |
| 14 | 0 | N/4 | 3N/8 | 7N/16 | 14N/32 |
| 15 | 0 | N/4 | 3N/8 | 7N/16 | 15N/32 |

## TABLEAU VIII

$N_i = 16$

|  | MASQUE | | | |
|---|---|---|---|---|
| ETAGE | 0 | 1 | 2 | 3 |
| COMPTEUR | 000 | 100 | 110 | 111 |
| 000 | 000 | 000 | 000 | 000 |
| 001 | 000 | 000 | 000 | 001 |
| 010 | 000 | 000 | 010 | 010 |
| 011 | 000 | 000 | 010 | 011 |
| 100 | 000 | 100 | 100 | 100 |
| 101 | 000 | 100 | 100 | 101 |
| 110 | 000 | 100 | 110 | 110 |
| 111 | 000 | 100 | 110 | 111 |

Si la mémoire 126 ne contient que les coefficients de l'intervalle, 0, π/4 un décodeur non représenté sur la figure 6 est inséré avant la mémoire 126, ce décodeur assure l'adressage de la mémoire 126 ainsi que l'adressage du dispositif 190 permettant le changement de signe conforme aux formules trigonométriques permettant de passer de l'intervalle [0, π/4] à l'intervalle [0, π].

Sur la figure 7, on peut voir la variation dans le temps des séquences d'adresse. La courbe 201 représente les variations dans le temps des séquences d'adresse $G_i$ de transfert entre la mémoire externe et la mémoire interne. La courbe 202 représente l'évolution dans le temps des séquences d'adresse du groupe dont on exécute les traitements. La courbe 203 représente l'évolution dans le temps des séquences d'adresse $G_i$ des transferts mémoire interne-mémoire externe. La courbe 204 représente les séquences d'adresse que doit calculer le processeur 129 de la figure 6. Ceci donc dans l'exemple ou on part de $G_i$ et ou k = 1 la séquence $G_i$, $G_i$ + 2, $G_i$ + 1, $G_i$ + 3, $G_i$ + 2, $G_i$ + 4, etc ... k est égal au nombre des termes de la suite partielle par le nombre de termes du groupe de l'étape en cours. Un exemple des implantations pour un calcul de groupe de huit termes comportant successivement trois étapes de quatre papillons de la figure 1 est donnée par le tableau IV. La suite de la première étape est séquentielle, au début de chacune des étapes suivantes on effectue un décalage circulaire à gauche de $\log_2$ (taille du groupe).

Sur la figure 8, on peut voir l'évolution dans le temps des fonctions exécutées par les mémoires 130 et 131. Les fonctions exécutées par la mémoire 130 portent la référence 87, celles exécutées par la mémoire 131 la référence 188. La longueur T1 correspond au temps de calcul, la longueur T2 correspond au retard pipe-line du calculateur. Une première fonction lecture d'une mémoire 130 porte sur la figure la référence 175 tandis que l'écriture porte la référence 178. Simultanément la mémoire 131 termine l'écriture en 171 et commence la gestion des entrées-sorties en 180. Au cycle suivant la mémoire 130 assure les échanges avec la mémoire externe en 176 i.e les entrées et sorties. Simultanément en 181 la mémoire 131 assure la lecture et en 185 l'écriture. Au cycle suivant les rôles sont rééchangés et en 177 la mémoire 130 assure la lecture et en 179 l'écriture tandis que la mémoire 131 assure les entrées et sorties en 182. La suite des cycles continuant de façon analogue n'est pas représentée sur la figure.

Le dispositif selon l'invention décrit ci-aprés vérifie le bon fonctionnement du circuit calculant la TFD en utilisant le théorème de Parseval plus simple à mettre en oeuvre que l'algorithme de calcul de la TFD. De plus, la fiabilité du système complet est accrue par l'indépendance des calculs de vérification par rapport aux calculs à vérifier.

Le théorème de Parseval indique que la puissance du signal analysé est égale à somme des puissances de ses harmoniques. Pour la TFD le théorème de Parseval s'exprime par la formule:

$$\sum_{n=0}^{N-1} \left| x(n) \right|^2 = \frac{1}{N} \sum_{k=0}^{N-1} \left| X(k) \right|^2 \qquad (I)$$

$x(n)$ étant le $n^{ième}$ élément de la séquence d'entrée du processeur TFD et $X(k)$ étant le $k^{ième}$ élément calculé par le processeur TFD.

Le calcul d'une TFD de N point par l'opérateur 500 de la figure 6 exige de parcourir

$$\frac{N}{2} \log_2 N$$

papillons FFT de la figure 1, ce qui correspond à $2N \log_2 N$ multiplications et à $3N \log_2 N$ additions. Par contre le calcul de vérification du résultat utilisant le théorème de Parseval exige 2N multiplications et 2(N − 1) additions. Ainsi le calcul de la TFD exige $\log_2 N$ fois le nombre de multiplications et

$$\frac{3N \log_2 N}{2(N − 1)}$$

fois le nombre d'additions de la vérification de ce calcul.

Dans un exemple de réalisation l'opérateur 500 de la figure 6 effectue des TFD sur N points, N variant entre 8 et 8000. Ainsi, dans le cas le moins favorable le dispositif de vérification de la TFD réalise trois fois moins de multiplications et 5,4 fois moins d'additions.

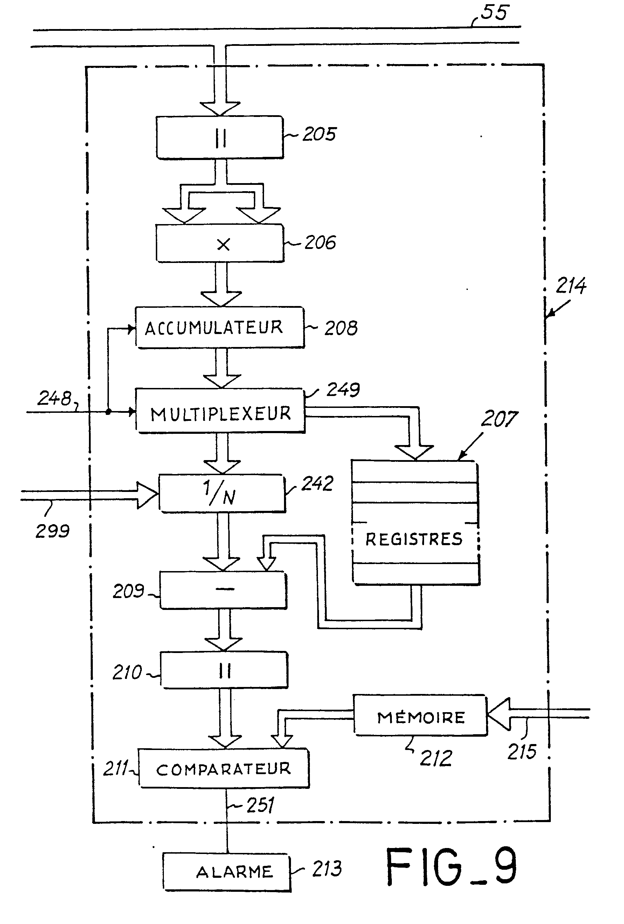

Sur la figure 9, on peut voir un premier exemple de réalisation d'un opérateur 214 de vérification de résultat d'un opérateur TFD.

L'opérateur 214 comporte un processeur 205 calculant la valeur absolue, un multiplieur 206, un accumulateur 208, un ensemble de registres 207, un soustracteur 209, un processeur 210 calculant la valeur absolue, un comparateur 211, une mémoire 212, un multiplexeur 249 et un diviseur 242.

L'opérateur 214 est connecté au bus 55 et lit alternativement les données entrant et sortant de l'opérateur 500 de la figure 6. La sortie du processeur 205 est connectée aux deux entrées du multiplieur 206 qui élève au carré la valeur absolue calculée par le processeur 205. Les carrés sont sommés dans l'accumulateur 208 qui calcule donc une somme de carré de valeur absolue, correspondant par exemple au second membre de l'égalité de Parseval. L'accumulateur 208 est connecté au multiplexeur 249. Le multiplexeur 249 transmet la valeur de l'accumulateur 208 alternativement au diviseur 242 ou au registre 207.

Le diviseur 242 divise la valeur reçue par N. La valeur N, égale au nombre de point sur lequel est effectuée la TFD, est transmise au diviseur 242 par le bus 299. Les registres 207 retardent le signal d'un nombre de temps prédéterminé. Par exemple, si le calcul des vérifications effectué par l'opérateur 214 est trois fois plus rapide que le calcul de la TFD par l'opérateur 50 de la figure 6, les registres 207 comportent trois registres connectés en série introduisant donc un retard de trois cycles d'horloge.

La sortie des registres 207 et du diviseur 242 aux deux entrées du soustracteur 209. Le soustracteur 209 calcule la différence entre les deux membres de l'égalité (I) théorème de Parseval. Le soustracteur 209 est connecté à l'opérateur 210 qui calcule la valeur absolue de la différence calculée par le soustracteur 209.

L'opérateur 210 d'une part et la mémoire 212 d'autre part sont connectés au comparateur 211. La mémoire 212 contient la valeur d'erreur maximale admissible dans le calcul de la TFD.

Avantageusement, la mémoire 212 est une mémoire vive (RAM) en terminologie anglo-saxonne). La valeur stockée dans la mémoire 212 est par exemple chargée par un bus 215. Si la différence entre les deux membres de l'égalité de Parseval (I) est supérieure à la tolérence stockée dans la mémoire 211 le comparateur 211 déclenche un dispositif d'alarme 213 par l'intermédiaire d'une ligne 251.

Il est bien entendu que les processeurs de la figure 9 sont données à titre d'exemples non limitatifs. Par exemple les processeurs 205 et 210 peuvent être absents dans une liaison parallèle si l'on ne conserve pas le signe. De même le diviseur 242 effectuant une division par une puissance de deux peut être remplacé par un câblage adéquat de l'opérateur 214.

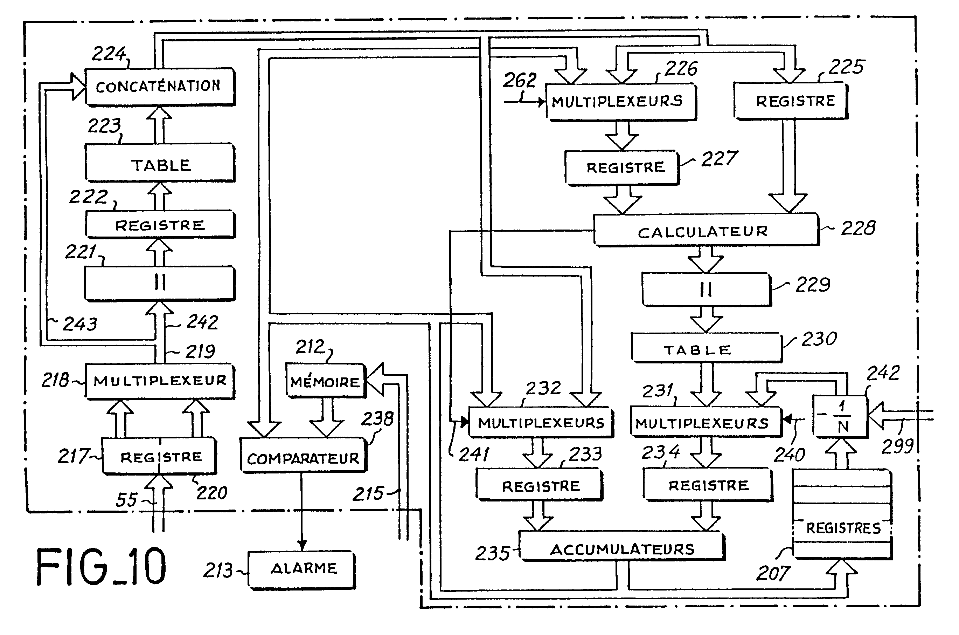

Sur la figure 10, on peut voir un second exemple de réalisation d'opérateur 214 de vérification de résultat de calcul de la TFD. L'opérateur 214 de la figure 10 utilise le calcul logarithmique décrit dans "Logarithmic addition for digital signal processing applications" M.M. Etzel-Bel Lab. Symposium on circuit and system May 1983.

Cet article écrit que le logarithme d'une somme est peu différent de la somme d'un premier logarithme constituant le terme principal et un second constituant un terme correctif.

Ainsi si à partir de N valeurs: $a_0, \ldots, a_i, \ldots, a_{N-1}$ on veut calculer

$$\log \left( \sum_{i=0}^{N+1} a_i \right)$$

on peut utiliser la formule:

$$\log \left[ \sum_{i=0}^{N-1} (a_i) \right] = \sum_{j=1}^{N} \log A_j + \sum_{k=0}^{N-1} \log \left( 1 \pm 2^{(-1)^{(X_k - X'_k)}(X_k - X'_k)} \right)$$

avec :

$$A_j = \text{Max} \left( a_j, \ldots, \sum_{i=0}^{j-1} a_i \right)$$

$$X'_k = \log \left( \sum_{i=0}^{k-1} a_k \right)$$

$$X_k = \log (a_k)$$

L'opérateur 214 est connecté au bus 55 par l'intermédiaire de deux registres 217 et 220. Les registres 217 et 220 sont connectés aux deux entrées d'un multiplexeur 218 délivrant alternativement sur un bus 219 la valeur d'un desdits registres L'utilisation de deux registres 217 et 220 permet d'adapter la capacité du bus 219 à celle par exemple deux fois supérieure du bus 55. Par exemple le bus 55 est un bus de 50 bits alors que le bus 219 est un bus de 24 bits. Le bus 219 se partage en deux bus 243 et 242. Le bus 242 fournit à un processeur 221 la mantisse tandis que le bus 243 fournit à un processeur de concaténation 224 l'exposant des nombres présents sur le bus 219.

Le processeur 21 calcule la valeur absolue. Le processeur 221 est connecté au registre 222. Le registre 222 comme les registres 225, 227, 233, 234, 207 assure la resynchronisation avec l'horloge et introduit les retards nécessaires à la synchronisation des calculs.

Le registre 222 est connecté à une table 223 qui à une valeur associe deux fois son logarithme. La table 223 est par exemple une mémoire morte (ROM en terminologie anglo-saxonne) dans laquelle aux adresses utiles sont stockés les nombres égaux à: $2 \times \log_2$ (adresse). La table 223 d'une part, et le bus 243 d'autre part sont connectés à un circuit de concatenation 224. Le circuit 224 accole en un seul nombre les deux nombres présents à la sortie de la table 223 et sur le bus 243. L'exposant présent sur le bus 243 devient des bits de poid fort (MSB en terminologie anglo-saxone) et le logarithme provenant de la table 223 devient des bits de poid faible (LSB en terminologie anglo-saxonne). Ainsi on retrouve à la sortie du circuit 224 le logarithme en base 2 ($x = e + \log_2 m$) du nombre présent à la sortie du multiplexeur 218 ($a = 2^e . m$) sous forme d'une mantisse et d'un exposant.

La sortie du circuit 224 est connectée au registre 225, à un multiplexeur 226 et à un multiplexeur 232. Le multiplexeur 226 est relié à un calculateur 228 par l'intermédiaire du registre 227. Le registre 225 est relié au calculateur 228. Le calculateur 228 calcule la différence

$$d = \log_2 a_j - \log_2 \sum_{i=0}^{j} a_i$$

Le calculateur 228 est connecté au processeur 229 qui calcule la valeur absolue. Le processeur 229 est connecté à une table 230 qui comporte les termes correctifs $z = \log_2 (1 \pm 2^{-d})$. La table 230 est connectée à un multiplexeur 231. Le multiplexeur 231 est relié à une entrée d'un accumulateur 235 par l'intermédiaire du registre 234. D'autre part le multiplexeur 232 relié à la sortie du circuit 224 est relié à l'autre entrée de l'accumulateur 235. L'accumulateur 235 calcule la somme des carrés correspondant aux membres de l'équation de Parseval (I).

L'accumulateur est relié d'une part à un comparateur 238 et d'autre part aux multiplexeurs 232, 226 et par l'intermédiaire des trois registres 207 au multiplexeur 231. Le retard apporté par le registre 207 permet de passer du premier au second membre de l'équation de Parseval (I) i.e. des données aux résultats de calcul de la TFD. Dans une variante de réalisation du dispositif selon l'invention les registres 207 sont reliés au multiplexeur 231 par l'intermédiaire d'un diviseur 242 par -I/N équivalent à un soustracteur en calcul logarithmique. La valeur de N est chargée par le bus 299. Dans l'autre réalisation du dispositif selon l'invention la division par N et le changement de signe sont effectués par un câblage adéquat.

Le calculateur 228 est susceptible de commander le multiplexeur 232 par la ligne 241. Si la valeur de

$$d = \log_2 a_i - \log \sum_{i=0}^{i} a_i$$

est supérieure à 0 le multiplexeur 232 transmet la somme partielle calculée par l'accumulateur 235. Si non, le multiplexeur 232 transmet la valeur de l'échantillon présent à la sortie du circuit 224.

Les multiplexeurs 226 et 231 reçoivent les signaux de commande respectivement 226 et 240 selon l'avancement des calculs de l'unité de contrôle 127 de la figure 6 ou des liaisons non représentées sur ladite figure.

L'accumulateur 235 effectue directement la différence entre les deux membres de l'équation de Parseval (I). Le comparateur 238 reçoit d'une part cette différence, et d'autre part la valeur de la tolérance maximale admissible stockée par exemple dans la mémoire 212. Dans une première variante de réalisation cette valeur de la tolérance est figée. Dans une seconde variante de réalisation cette valeur de la tolérance peut être chargée par le bus 215.

Dans le case où la différence des deux membres de l'équation de Parseval (I) est supérieure à la valeur de la tolérance maximale admissible stockée dans la mémoire 212 le comparateur 238 déclenche un dispositif d'alarme 213.

Dans une première variante de réalisation le dispositif selon l'invention est réalisé sous forme de circuits imprimés. Avantageusement le dispositif selon l'invention comporte des circuits intégrés. Avantageusement ces circuits intégrés sont en technologie en arséniure de gallium assurant une grande rapidité de traitement.

DAns une seconde variante du dispositif selon l'invention à réaliser sous forme de circuit intégré. Avantageusement ce cicuit intégré est réalisé en technologie en arséniure de gallium.

## Revendications

1. Opérateur (214) de vérification de la transformée de Fourier discrète concernant une suite de N signaux de données n(n) dont on calcule la transformée de Fourier et une suite de N signaux de résultats (X(k) du calcul, caractérisé par le fait qu'il comporte des moyens (205—208) pour générer deux signaux représentant d'une part la puissance des signaux de données x(n) selon la formule

$$\sum_{n=o}^{N-1} |x(n)|^2$$

et d'autre part la puissance des signaux de résultats X(k) selon la formule

$$\frac{1}{N} \sum_{k=0}^{N-1} |X(k)|^2,$$

des moyens (209) pour générer la différence entre ces deux signaux de puissance, un comparateur (211, 238) émettant un signal électrique (251) si la valeur de la différence des deux signaux de puissance présente à une première de ses entrées est supérieure à une valeur de la tolérance présente sur une seconde de ses entrées.

2. Opérateur (214) selon la revendication 1, caractérisé par le fait qu'il est connecté à des bus de données et qu'il vérifie les résultats de calcul de la transformée de Fourier discrète en captant sur les bus les signaux de données x(n) dont on calcule la transformée de Fourier discrète et les signaux de rèsultat X(k) du calcul de la transformée de Fourier discrète.

3. Opérateur (214) selon la revendication 2, caractérisé par le fait qu'il capte successivement sur un même bus (55) les données dont on veut calculer la transformée de Fourier discrète et les résultats de ce calcul.

4. Opérateur (214) selon la revendication 1 ou 2 ou 3, caractérisé par le fait qu'il comporte un processeur (205) calculant la valeur absolue dont la sortie est connectée aux deux entrées d'un multiplieur (206) lui-même connecté à un accumulateur (208), l'accumulateur (208) est connecté à un multiplexeur (249), le multiplexeur (249) est connecté à un soustracteur (209) d'une part à travers un diviseur (242) et d'autre part à travers des registres (207) induisant un retard.

5. Opérateur (214) selon l'une quelconque des revendications 1 à 3, caractérisé par le fait que les moyens de génération des signaux de puissance comportent des moyens (223, 230) de calcul de logarithme, selon la formule:

$$\log \left[ \sum_{i=0}^{N-1} (a_j) \right] = \sum_{j=1}^{N} \log A_j + \sum_{k=0}^{N-1} \log \left( 1 \pm 2^{(-1)^{(X_k - X'_k)} (X_k - X'_k)} \right)$$

avec :

$$A_j = \text{Max} \left( a_j, \ldots, \sum_{i=0}^{j-1} a_i \right)$$

$$X'_k = \log \left( \sum_{i=0}^{k-1} a_k \right)$$

$$X_k = \log (a_k)$$

6. Opérateur (214) selon l'une quelconque des revendications 1 à 5, caractérisé par le fait qu'il comporte des circuits integrés.

7. Opérateur (214) selon l'une quelconque des revendications 1 à 5, caractérisé par le fait qu'il est réalisé sous forme d'un circuit intégré.

8. Opérateur (214) selon l'une quelconque des revendications précédentes, caractérisé par le fait qu'il est associé à un dispositif d'alarme (213) destiné à signaler le mauvais fonctionnemente de l'opérateur effectuant les transformées de Fourier discrètes.

9. Circuit, caractérisé par le fait qu'il comporte un opérateur (500) susceptible, de calculer en transformée de Fourier discrète et un opérateur (214) selon l'une quelconque des revendications 1 à 8.

10. Circuit selon la revendication 5, caractérisé par le fait qu'il est réalisé en arséniure de gallium.

**Patentansprüche**

1. Operator (214) zur Überprüfung der diskreten Fouriertransformierten betreffend eine Folge von N Datensignalen x(n), deren Fouriertransformierte berechnet wird, und eine Folge von N Ergebnissignalen X(k) der Berechnung, dadurch gekennzeichnet, daß er Mittel (205—208) zum Erzeugen zweier Signale, welche zum einen die Potenz der Datensignale x(n) entsprechend der Formel

$$\sum_{n=o}^{N-1} |x(n)|^2$$

und zum anderen die Potenz der Ergebnissignale X(k) entsprechend der Formel

$$\frac{1}{N} \sum_{k=0}^{N-1} |X(k)|^2$$

darstellen, Mittel (209) zum Erzeugen der Differenz zwischen diesen Potenzsignalen, einen Komparator (211, 238) zum Ausgeben eines elektrischen Signals (251), wenn der an einem ersten ihrer Eingänge erscheindende Differenzwert zwischen den beiden Potenzsignalen größer als ein an einem zweiten ihrer Eingänge erscheinender Toleranzwert ist.

2. Operator (214) nach Anspruch 1, dadurch gekennzeichnet, daß er an Datenschienen angeschlossen ist und die Berechnungsergebnisse der diskreten Fouriertransformierten durch Abfrage der Datensignals x(n) auf denn Schienen überprüft, deren diskrete Fouriertransformierte und die Ergebnissignale X(k) der Berechnung der diskreten Fouriertransformierten berechnet werden.

3. Operator (214) nach Anspruch 2, dadurch gekennzeichnet, daß er von der gleichen Schiene (55) nacheinander die Daten, deren diskrete Fouriertransformierte berechnet werden soll, sowie die Berechnungsergebnisse abfragt.

4. Operator (214) nach einem der Ansprüche 1 bis 3, dadurch gekennzeichnet, daß er einen Prozessor (205) besitzt, der den Absolutwert berechnet und dessen Ausgang an die beiden Eingänge eines Multiplizierers (206) angeschlossen ist, der seinerseits mit einem Akkumulator (208) verbunden ist, wobei der Akkumulator (208) an einen Multiplexer (249) angeschlossen ist und der Multiplexer (249) mit einem Subtrahierer (209) einerseits über eine Teilerschaltung (242), andererseits über Register (207) mit Verzögerungswirkung verbunden ist.

5. Operator (214) nach einem beliebigen der Ansprüche 1 bis 3, dadurch gekennzeichnet, daß die Mittel zum Erzeugen der Potenzsignale Mittel (223, 230) zum Berechnen von Logarithmen entsprechend der folgenden Formel umfassen:

$$\log \left[ \sum_{i=0}^{N-1} (a_i) \right] = \sum_{j=1}^{N} \log A_j + \sum_{k=0}^{N-1} \log (1 \pm 2^{(-1)^{(X_k - X'_k)}(X_k - X'_k)})$$

mit:

$$A_j = \text{Max} (a_j, \ldots, \sum_{i=0}^{j-1} a_i)$$

$$X'_k = \log (\sum_{i=0}^{k-1} a_k)$$

$$X_k = \log (a_k)$$

6. Operator (214) nach einem beliebigen der Ansprüche 1 bis 5, dadurch gekennzeichnet, daß er integrierte Schaltungen aufweist.

7. Operator (214) nach einem der Ansprüche 1 bis 5, dadurch gekennzeichnet, daß er als eine integrierte Schaltung ausgeführt ist.

8. Operator (214) nach einem der vorhergehenden Ansprüche, dadurch gekennzeichnet, daß er mit einer Alarmeinrichtung (213) in Verbindung steht, die das fehlerhafte Arbeiten des die diskreten Fouriertransformierten berechnenden Operators anzeigt.

9. Schaltung, dadurch gekennzeichnet, daß sie einen Operator (500) aufweist, der mit Fouriertransformierten rechnen kann, sowie einen Operator (214) gemäß einem beliebigen der Ansprüche 1 bis 8.

10. Schaltung nach Anspruch 5, dadurch gekennzeichnet, daß sie aus Galliumarsenid aufgebaut ist.

**Claims**

1. An operator (214) for verifying the discrete Fourier transform concerning a sequence of N data signals x(n), whose Fourier transform is calculated, and a sequence of N signals expressing the calculation results X(k), characterized in that it comprises means (205—208) for generating two signals which represent firstly the power of the data signals x(n) according to the expression

$$\sum_{n=0}^{N-1} |x(n)|^2,$$

and secondly the power of the result signals X(k) according to the expression

$$\frac{1}{N} \sum_{k=0}^{N-1} |X(k)|^2,$$

means (209) adapted to generate the difference between these two power signals, a comparator (211, 238) adapted to output an electric signal (251), if the difference value of the two power signals appearing at a first of their outputs is superior to a tolerance value appearing at a second of their outputs.

2. An operator (214) according to claim 1, characterized in that it is connected to data busses, and in that it verifies the results of calculation of the discrete Fourier transform by way of picking up from the busses the data signals x(n), whose discrete Fourier transform is calculated, as well as the result signals X(k) of the calculation of the discrete Fourier transform.

3. An operator (214) according to claim 2, characterized in that it picks up from a same bus (55) successively the data whose discrete Fourier transform is to be calculated, as well as the calculation results.

4. An operator (214) according to one of claims 1 to 3, characterized in that it comprises a processor (205) adapted to calculate the absolute value, whose output is connected to two inputs of as multiplier (206), which in turn is connected to an accumulator (208), the accumulator (208) being connected to a multiplexer (249), said multiplexer (249) being connected to a subtractor (209) on the one hand via a divider (242) and on the other hand via registers that introduce delay.

5. An operator (214) according to any one of claims 1 to 3, characterized in that the power signal generation means comprise means (223, 230) for the calculation of logarithms according to the expression:

$$\log \left[ \sum_{i=0}^{N-1} (a_i) \right] = \sum_{j=1}^{N} \log A_j + \sum_{k=0}^{N-1} \log (1 \pm 2^{(-1)^{(X_k - X'_k)}(X_k - X'_k)})$$

wherein:

$$A_j = \text{Max} (a_j, \ldots, \sum_{i=0}^{j-1} a_i)$$

$$X'_k = \log (\sum_{i=0}^{k-1} a_k)$$

$$X_k = \log (a_k)$$

6. An operator (214) according to any one of claims 1 to 5, characterized in that it comprises integrated circuits.

7. An operator (214) according to any one of claims 1 to 5, characterized in that it is implemented by means of an integrated circuit.

8. An operator (214) according to any one of the preceding claims, characterized in that it is associated to an alarm device (213), intended to signal the defective functioning of the operator effectuating the discrete Fourier transforms.

9. A circuit, characterized in that it includes an operator (500) susceptible of calculating in terms of discrete Fourier transform and an operator (214) according to any one of claims 1 to 8.

10. A circuit according to claim 1, characterized in that it is made of gallium arsenide.

# FIG_1

# FIG_2

# FIG_3

# FIG_4

EP  0 190 514  B1

# FIG_5

# FIG_6

EP 0 190 514 B1

# FIG_7

| $G_i$ | $G_{i+k}$ | $G_{i+2k}$ | $G_{i+3k}$ | 201 |

| $G_i$ | $G_{i+k}$ | $G_{i+2k}$ | 202 |

| $G_i$ | $G_{i+k}$ | 203 |

| $G_{i-2k}$ | $G_i$ | $G_{i-k}$ | $G_{i+k}$ | $G_i$ | $G_{i+2k}$ | $G_{i+k}$ | $G_{i+3k}$ | 204 |

# FIG_8

$T_1$

175   176   177

187

178   181   179

180   188

171

185   182

$T_2$

FIG_9

FIG_10

EP 0 190 514 B1